# EUROPEAN PATENT SPECIFICATION

(11) **EP 2 204 326 B1**
(45) Date of publication and mention of the grant of the patent: **11.07.2012**
(21) Application number: 09177508.0
(22) Date of filing: 30.11.2009
(51) Int. Cl.: B65B 61/28, G01N 21/95, B65B 5/10

(54) **Medicine pouch arranging device**
Vorrichtung zum Anordnen eines Medikamentenbeutels
Dispositif d'agencement d'un sachet de médicaments

(30) Priority: 06.01.2009 KR 20090000730
(43) Date of publication of application: 07.07.2010
(73) Proprietor: JVM Co., Ltd., Daegu 704-900 (KR)
(72) Inventor: KIM, Jun-Ho, 706-014, Daegu (KR)
(74) Representative: Kling, Simone

(56) References cited:
- WO-A1-2004/072626
- WO-A2-2008/033019
- DE-A1- 4 225 183

## Description

### BACKGROUND OF THE INVENTION

### Field of the Invention

The present invention relates to a medicine pouch arranging device, which is capable of spreading a medicine packed in a medicine pouch without a risk of medicine overlap and more particularly, to a medicine pouch arranging device, which is capable of uniformly spreading a plurality of tablets of medicine packed in a medicine pouch, thereby allowing a person to inspect, with the naked eye or by use of an inspection device, whether a correct medicine is packed in the medicine pouch when a variety of medicines is automatically packed.

### Description of the Related Art

Recently, an automatic medicine packing machine has been developed and used, in which a variety of medicines, such as tablets, capsules, etc., discharged from a plurality of medicine storage cassettes, are successively packed on a per dose basis.

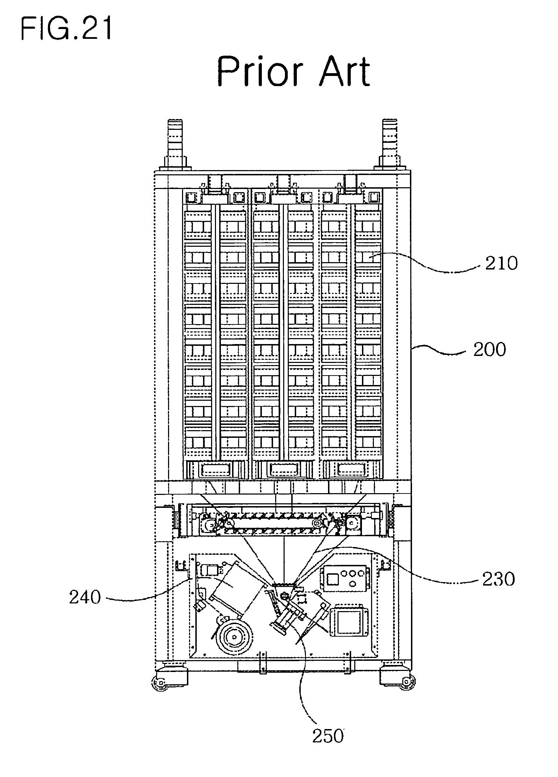

FIG. 21 is a schematic longitudinal sectional view of a conventional automatic medicine packing machine. Referring to FIG. 21, the conventional automatic medicine packing machine includes a body 200, a plurality of cassettes 210 arranged densely in an upper region of the body 200 and configured to store various sizes and shapes of medicines, such as tablets, capsules, etc., a hopper 230 arranged in a lower region of the body 200 to collect a medicine dropped from the cassettes 210, a printing device 240 to print a variety of information on a surface of a medicine pouch in which the medicine will be packed, and a packing device 250 to introduce the medicine, collected by the hopper 230, into the medicine pouch and to seal the medicine pouch.

In use of the above described conventional automatic medicine packing machine, it is necessary to inspect whether a correct medicine is packed in the medicine pouch prior to supplying a consumer with the medicine pouch. Specifically, since the respective cassettes 210 of the conventional automatic medicine packing machine store dozens or hundreds of medicines, there exists a risk of an incorrect medicine being packed in the medicine pouch or a risk of a greater or smaller number of tablets of medicine than a predetermined number being packed in the medicine pouch due to, e.g., malfunctions of the machine. Supplying a consumer with the medicine pouch enclosing the incorrect medicine may cause medicine misapplication accidents. Therefore, it is essential to inspect whether a correct medicine is packed in the medicine pouch based on a medical prescription, prior to finally supplying a consumer with the medicine pouch.

Normally, inspection to determine whether normal packing has been accomplished is performed with the naked eye or by use of an automatic visual inspection system.

Korean Patent Registrations No. 0591518 and No. 0650285 and Japanese Patent Laid-open Publication No. 1998-0162116 disclose conventional systems for inspecting whether a correct medicine is packed. Of these disclosed systems, a visual inspection system includes a camera to photograph an image of a medicine pouch in which a medicine is packed, and an image reader to determine whether normal packing has been accomplished via the image photographed by the camera.

To inspect whether a correct medicine is packed with the naked eye or by use of the above described visual inspection system, first of all, it is important to uniformly distribute tablets of medicine packed in a medicine pouch without a risk of medicine overlap. This is because inspection by the naked eye or a camera image may erroneously determine a correctly packed medicine pouch as a defective one when tablets of medicine packed in a medicine pouch overlap each other. Moreover, when tablets of medicine packed in the medicine pouch overlap each other, it is technically difficult to confirm whether the tablets overlap each other or whether some of the tablets are broken.

### SUMMARY OF THE INVENTION

Therefore, the present invention has been made in view of the above problems, and it is an object of the present invention to provide a medicine pouch arranging device, which is capable of uniformly spreading tablets of medicine packed in a medicine pouch that is being transferred toward an inspection device by directly applying shock or vibration to the medicine pouch, thereby enabling accurate inspection to determine whether a correct medicine is packed in the medicine pouch when a variety of medicines is automatically packed.

In accordance with the present invention, the above and other objects can be accomplished by applying shock or vibration to a series of successively transferred medicine pouches in the form of a band, so as to uniformly spread some tablets of medicine, which overlap each other or are vertically or obliquely erected in the respective medicine pouches. More particularly, in accordance with first to fourth embodiments of the present invention, a vibrator is operated below a medicine pouch to directly apply shock to the medicine pouch, achieving uniform arrangement of tablets of medicine packed in the medicine pouch. The first embodiment features an elliptical cross sectional rotating member, the second embodiment features a bar-shaped member to be moved up and down like a seesaw, and the third and fourth embodiments feature a pneumatic air nozzle and air cylinder respectively. The shorter the application frequency of the shock and the greater the application number of the shock, the more effective is the distribution of the tablets of medicine packed in the medicine pouch.

In accordance with fifth and sixth embodiments of the present invention, a plate member and a cam member are used to indirectly transmit shock or vibration to tablets of medicine packed in a medicine pouch, achieving effective distribution of the tablets. The fifth embodiment and the sixth embodiment employ different application directions of shock perpendicular to each other.

In accordance with seventh to ninth embodiments of the present invention, rotation driving force of a motor is transmitted to a vibrating plate supporting a medicine pouch through a link member and a cam member, so that the vibrating plate accomplishes distribution of tablets of medicine packed in the medicine pouch by fast reciprocal rotating motion thereof within a limited range. For distribution of the tablets, the seventh embodiment and the ninth embodiment feature shaking of the medicine pouch on a plane parallel to the medicine pouch, and the eighth embodiment features rolling vibration of the medicine pouch.

In accordance with a tenth embodiment of the present invention as the most effective solution, a method for applying shock to a medicine pouch and a method for vibrating a plate on which the medicine pouch is supported are combined. The shock obtained by rotation driving force of a single motor is directly applied to the medicine pouch and simultaneously, the medicine pouch is subjected to horizontal vibration and rotational vibration within a limited range, resulting in further effective distribution of tablets of medicine packed in the medicine pouch.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a schematic front view of a medicine pouch inspection machine having a medicine pouch arranging device according to the present invention;
FIG. 2 is a schematic view of a medicine pouch arranging device according to a first embodiment of the present invention;
FIG. 3 is a schematic view of a medicine pouch arranging device according to a second embodiment of the present invention;
FIG. 4 is a schematic view of a medicine pouch arranging device according to a third embodiment of the present invention;
FIG. 5 is a schematic view of a medicine pouch arranging device according to a fourth embodiment of the present invention;
FIG. 6 is a schematic view of a medicine pouch arranging device according to a fifth embodiment of the present invention;
FIG. 7 is a schematic view of a medicine pouch arranging device according to a sixth embodiment of the present invention;
FIG. 8 is a schematic view of a medicine pouch arranging device according to a seventh embodiment of the present invention;
FIG. 9 is a schematic view of a medicine pouch arranging device according to an eighth embodiment of the present invention;
FIGS. 10 and 11 are respectively a schematic front view and a schematic plan view of a medicine pouch arranging device according to a ninth embodiment of the present invention;
FIG. 12 is a perspective view illustrating important parts of the medicine pouch arranging device according to the ninth embodiment of the present invention;
FIG. 13 is a schematic view of a medicine pouch arranging device according to a tenth embodiment of the present invention;
FIG. 14 is a schematic view illustrating a rotation unit included in the medicine pouch arranging device according to the tenth embodiment of the present invention;
FIG. 15 is a schematic view illustrating a vibration applying unit included in the medicine pouch arranging device according to the tenth embodiment of the present invention; and
FIGS. 16 to 20 are views schematically illustrating an operation of the medicine pouch arranging device according to the tenth embodiment of the present invention.

### DETAILED DESCRIPTION OF THE INVENTION

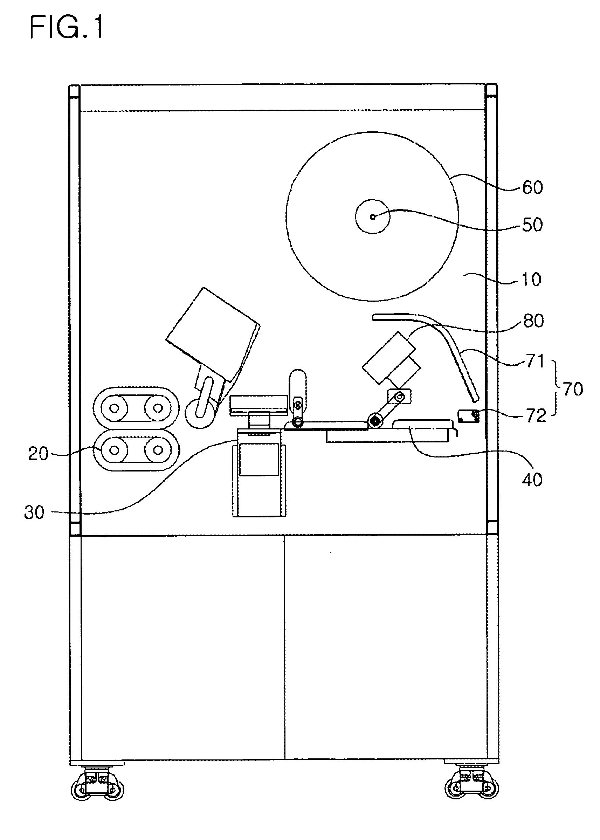

FIG. 1 is a schematic front view of a medicine pouch inspection machine having a medicine pouch arranging device according to the present invention.

As shown in FIG. 1, the medicine pouch inspection machine according to the present invention includes a transfer device 20, an image reading device 30, and a medicine pouch arranging device 40. The transfer device 20 is arranged in a body 10 and serves to transfer a bundle of a plurality of medicine pouches in a given direction (from the right side to the left side when viewed in FIG. 1), the plurality of medicine pouches being successively connected to one another. The medicine pouch arranging device 40 serves to uniformly spread tablets of medicine packed in each medicine pouch that is being transferred to the image reading device 30. The image reading device 30 photographs an image of an upper surface of the medicine pouch transferred by the transfer device 20 and reads the number and status of tablets of medicine packed in the medicine pouch via the photographed image.

The medicine pouch inspection machine further includes a bobbin support 50 mounted to a front side of the body 10, a bobbin 60 fitted around the bobbin support 50, and a medicine pouch bundle guide unit 70 to guide the bundle of medicine pouches unrolled from the bobbin 60.

The bobbin support 50 is rotatably mounted to the front side of the body 10 at a position above the medicine pouch arranging device 40. The bobbin 60, on which the bundle of medicine pouches is wound, is detachably fitted around the bobbin support 50, and is rotatably disposed at the front side of the body 10.

The bobbin 60 as a reel of the bundle of medicine pouches is manually fitted around the bobbin support 50 after a user winds the bundle of medicine pouches on the bobbin 60. This may assure effective supply of the medicine pouches within the medicine pouch inspection machine. After all the medicine pouches wound on the bobbin 60 are unrolled (in other words, after the bundle of medicine pouches wound on the single bobbin 60 is completely inspected), it is possible for the user to separate the bobbin 60 from the bobbin support 50 and then, to again fit the bobbin 60, on which another bundle of medicine pouches to be inspected has been wound, to the bobbin support 50.

The medicine pouch bundle guide unit 70 serves to guide the bundle of medicine pouches unrolled from the bobbin 60 toward the medicine pouch arranging device 40 by rotating the bobbin support 50. The medicine pouch bundle guide unit 70 includes a guide plate 71 mounted to the front side of the body 10 at a position below the bobbin 60, and a guide rod 72 rotatably mounted to the front side of the body 10 to change a movement direction of the bundle of medicine pouches guided by the guide plate 71 toward the medicine pouch arranging device 40. Here, the installation position and shape of the guide plate 71 and the installation position and number of the guide rod 72 may be appropriately changed at the stage of design in consideration of positions of the bobbin support 50 and the medicine pouch arranging device 40.

The medicine pouch inspection machine may further include a barcode reader 80 mounted to the front side of the body 10 at a position below the bobbin 60 fitted around the bobbin shaft 50. The barcode reader 80 serves to read a barcode printed on an outer surface of each medicine pouch to be moved to an inspection site. Using the barcode reader 80 may allow the medicine pouch inspection machine to conveniently acquire information related to the medicine pouch to be inspected.

In the medicine pouch inspection machine having the above described configuration, the medicine pouch arranging device disperses the tablets of medicine placed in each medicine pouch by applying shock or vibration to the medicine pouch, whereby the image reading device 30 can easily recognize the individual tablets.

Hereinafter, the medicine pouch arranging device according to preferred embodiments of the present invention will be described in detail with reference to the accompanying drawings.

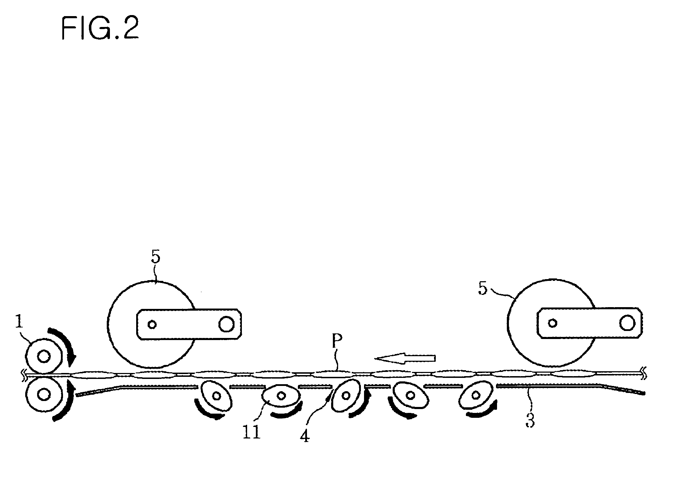

FIGS. 2 to 5 are schematic views of different medicine pouch arranging devices according to first to fourth embodiments of the present invention.

As shown in FIGS. 2 to 5, the present invention provides the medicine pouch arranging device, which is adapted to directly apply shock to a medicine pouch P that is being transferred to an inspection device, thereby uniformly spreading tablets of a medicine packed in the medicine pouch P.

Referring to FIG. 2, the medicine pouch arranging device according to the first embodiment of the present invention includes transfer rollers 1 to transfer a series of medicine pouches P discharged in succession from an automatic medicine packing machine (not shown) in which a medicine is automatically packed on a per dose basis, a guide plate 3 arranged below the medicine pouches P to support the medicine pouches P that are being transferred, and at least one vibrator to vibrate the medicine pouches P by directly applying shock to the medicine pouches P that are being transferred.

Preferably, at least one sponge roller 5 is arranged above the guide plate 3 and is used to press each of the medicine pouches P so that some vertically or obliquely erected tablets of medicine packed in the medicine pouch P lay down.

Although FIG. 2 illustrates the transfer rollers 1 as being located downstream of the vibrator in a transfer direction of the medicine pouches P, the transfer rollers 1 may be located upstream of the vibrator, or other transfer rollers (not shown) may be additionally arranged upstream of the vibrator.

The guide plate 3 has at least one opening 4, through which the vibrator is capable of directly applying shock to the medicine pouch P being transferred. Preferably, a plurality of the openings 4 perforated in the guide plate 3 is arranged at a predetermined interval in the transfer direction of the medicine pouches P, i.e. in a longitudinal direction of the guide plate 3. In addition, the number and position of the openings 4 are preferably equal to the number and position of the vibrator.

In accordance with the first embodiment, the vibrator includes a cam member 11, which is rotated by a rotation driving unit, such as a motor. Although FIG. 2 illustrates a total of five cam members 11 as being installed, of course, the installation number of the cam members 11 is not limited thereto.

The cam member 11 takes the form of a roller having an approximately elliptical cross section. The cam member 11 passes through the opening 4 of the guide plate 3 along a major axis thereof while being rotated, thereby acting to vibrate the medicine pouch P. As the medicine pouch P is vibrated upon receiving mechanical shock by the cam member 11, the tablets of medicine packed in the medicine pouch P can be uniformly spread.

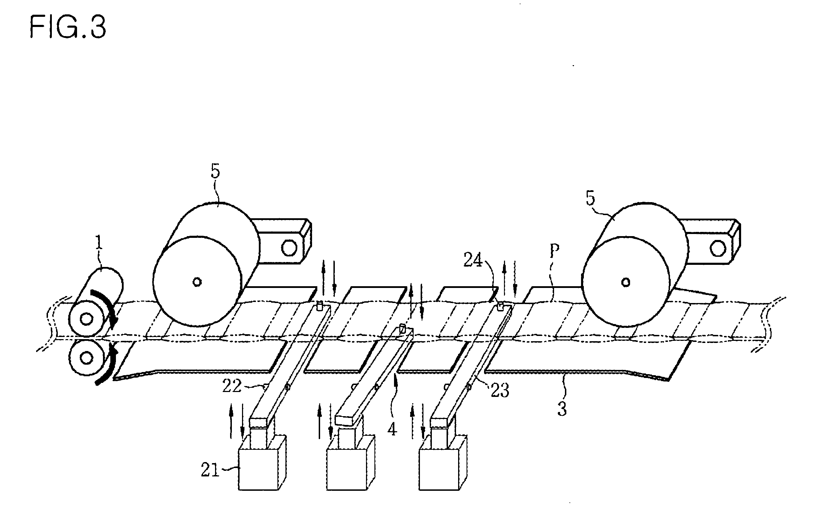

Referring to FIG. 3, similar to the medicine pouch arranging device of the previously described first embodiment, the medicine pouch arranging device according to the second embodiment of the present invention includes the transfer rollers 1 to transfer the medicine pouches P discharged in succession from the automatic medicine packing machine (not shown) in which a medicine is automatically packed on a per dose basis, the guide plate 3 arranged below the medicine pouches P to support the medicine pouches P that are being transferred, and the at least one vibrator to vibrate the medicine pouches P by directly applying shock to the medicine pouches P that are being transferred.

Even in the second embodiment, similarly, the at least one sponge roller 5 is preferably arranged above the guide plate 3 and is used to press each of the medicine pouches P so that some vertically or obliquely erected tablets of medicine packed in the medicine pouch P are laid flat.

The medicine pouch arranging device according to the second embodiment differs from the medicine pouch arranging device according to the first embodiment only in view of the vibrator and thus, this difference alone will be described hereinafter in detail.

In accordance with the second embodiment, the vibrator, which is adapted to directly apply shock to the medicine pouch P through the at least one opening 4 of the guide plate 3, includes an air cylinder 21 serving as a vertical driver, and a pivoting member 23 installed to be pivoted about a pivoting shaft 22 by the vertical driver.

Alternatively, instead of the air cylinder 21, the vertical driver may be a solenoid to move one end of the pivoting member 23 up and down. One end of the pivoting member 23 may be connected to the air cylinder 21 as the vertical driver, and the other end of the pivoting member 23 may be formed with a boss 24 to concentrate the shock on the medicine pouch P. In accordance with the second embodiment, the boss 24 is brought into direct contact with the medicine pouch P, causing vibration of the medicine pouch P.

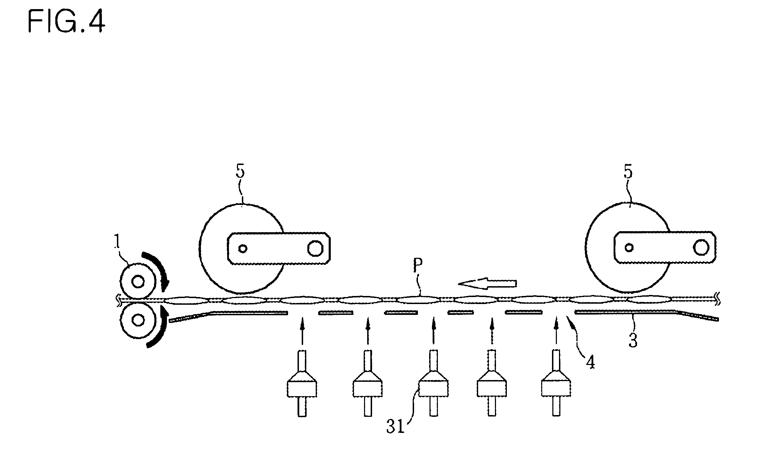

Referring to FIG. 4, similar to the medicine pouch arranging device of the previously described first embodiment, the medicine pouch arranging device according to the third embodiment of the present invention includes the transfer rollers 1 to transfer the medicine pouches P discharged in succession from the automatic medicine packing machine (not shown) in which a medicine is automatically packed on a per dose basis, the guide plate 3 arranged below the medicine pouches P to support the medicine pouches P that are being transferred, and the at least one vibrator to vibrate of the medicine pouches P by directly applying shock to the medicine pouches P that are being transferred.

Even in the third embodiment, similarly, the at least one sponge roller 5 is preferably arranged above the guide plate 3 and is used to press each of the medicine pouches P so that some vertically or obliquely erected tablets of medicine packed in the medicine pouch P are laid flat.

The medicine pouch arranging device according to the third embodiment differs from the medicine pouch arranging device according to the first embodiment only in view of the vibrator and thus, this difference alone will be described hereinafter in detail.

In accordance with the third embodiment, the vibrator, which is adapted to directly apply shock to the medicine pouch P through the at least one opening 4 of the guide plate 3, includes an air nozzle 31 capable of ejecting air.

The air nozzle 31 may be controlled to successively eject air at a predetermined pressure, or may be controlled to vary an ejection pressure of air in a predetermined pattern. In the third embodiment, the sponge roller 5 is preferably located downstream of the air nozzle 31, to press the medicine pouch P having passed through the air nozzle 31 so that the erected or irregularly dispersed tablets of medicine can be laid down and arranged by pressure of the air ejected from the air nozzle 31.

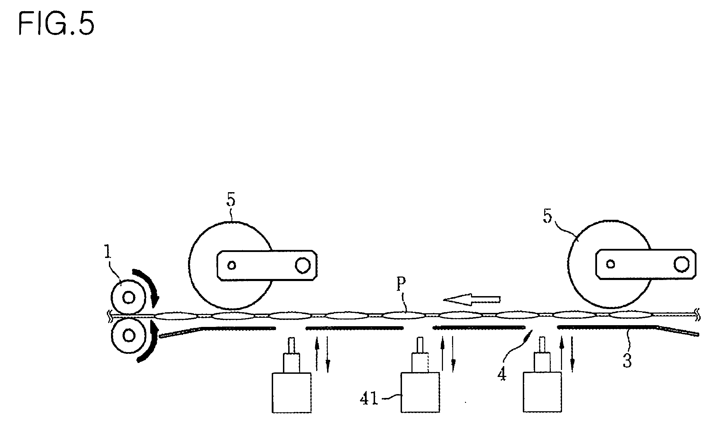

Referring to FIG. 5, similar to the medicine pouch arranging device of the previously described first embodiment, the medicine pouch arranging device according to the fourth embodiment of the present invention includes the transfer rollers 1 to transfer the medicine pouches P discharged in succession from the automatic medicine packing machine (not shown) in which a medicine is automatically packed on a per dose basis, the guide plate 3 arranged below the medicine pouches P to support the medicine pouches P that are being transferred, and the at least one vibrator to vibrate the medicine pouches P by directly applying shock to the medicine pouches P that are being transferred.

Even in the fourth embodiment, similarly, the at least one sponge roller 5 is preferably arranged above the guide plate 3 and is used to press each of the medicine pouches P so that some vertically or obliquely erected tablets of medicine packed in the medicine pouch P are laid flat.

The medicine pouch arranging device according to the fourth embodiment differs from the medicine pouch arranging device according to the first embodiment only in view of the vibrator and thus, this difference alone will be described hereinafter in detail.

In accordance with the fourth embodiment, the vibrator, which is adapted to directly apply shock to the medicine pouches P through the at least one opening 4 of the guide plate 3, includes an air cylinder 41 adapted to be vertically reciprocally driven.

The air cylinder 41 may be equal to the air cylinder 21 according to the above described second embodiment, and may be replaced by a solenoid as a vertical driver.

Although FIG. 5 illustrates a total of three air cylinders 41 as being installed, of course, the present invention is not limited thereto.

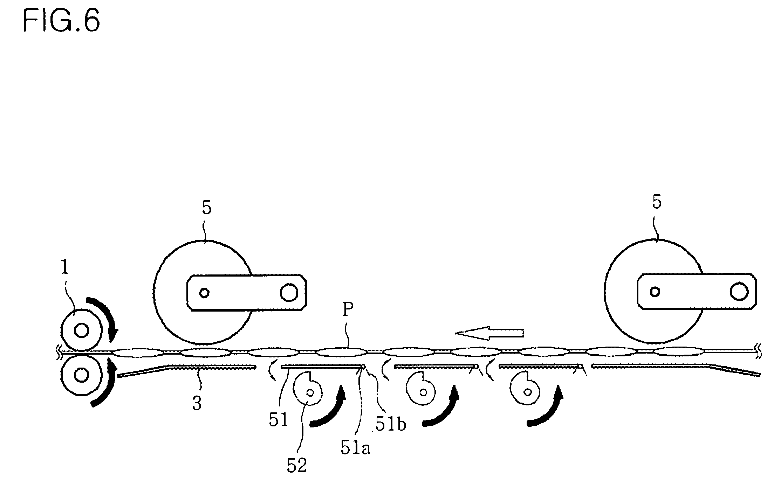

Referring to FIG. 6, similar to the medicine pouch arranging device of the previously described first embodiment, the medicine pouch arranging device according to a fifth embodiment of the present invention includes the transfer rollers 1 to transfer the medicine pouches P discharged in succession from the automatic medicine packing machine (not shown) in which a medicine is automatically packed on a per dose basis, the guide plate 3 arranged below the medicine pouches P to support the medicine pouches P that are being transferred, and the at least one vibrator to vibrate the medicine pouches P by indirectly applying shock to the medicine pouches P that are being transferred.

Even in the fifth embodiment, similarly, the at least one sponge roller 5 is preferably arranged above the guide plate 3 and is used to press each of the medicine pouches P so that some vertically or obliquely erected tablets of medicine packed in the medicine pouch P are laid flat.

The medicine pouch arranging device according to the fifth embodiment differs from the medicine pouch arranging device according to the first embodiment only in view of the guide plate and the vibrator and thus, these differences alone will be described hereinafter in detail.

In accordance with the fifth embodiment, vibration of the medicine pouch P is realized as the guide plate 3, on which the medicine pouch P is supported, is vibrated by the vibrator.

The guide plate 3 includes at least one vertically vibrating plate 51 adapted to be vibrated by the vibrator. The vibrator is adapted to indirectly transmit shock to the medicine pouch P via the vertically vibrating plate 51. Preferably, a plurality of the vertically vibrating plates 51 is aligned in the transfer direction of the medicine pouches P, i.e. in the longitudinal direction of the guide plate 3. In addition, the number and position of the vertically vibrating plates 51 are preferably equal to the number and position of the vibrator.

In accordance with the fifth embodiment, the vibrator includes a cam member 52 adapted to be rotated by a rotation driving unit, such as a motor (not shown). Although FIG. 6 illustrates a total of three cam members 52 as being installed, of course, the installation number of the cam member 52 is not limited thereto.

The cam member 52 has a logarithmic spiral cross section a radius of which gradually increases. The cam member 52 comes into contact with a lower surface of the vertically vibrating plate 51 of the guide plate 3. One end of the vertically vibrating plate 51 is provided with a pivoting shaft 51a so that the other end of the vertically vibrating plate 51 is pivoted about the pivoting shaft 51a. Accordingly, as the cam member 52 is rotated, the vertically vibrating plate 51 is pivotally vibrated up and down about the pivoting shaft 51a.

Although FIG. 6 illustrates the vertically vibrating plate 51 as being horizontally oriented when a largest radius point of the cam member 52 comes into contact with the vertically vibrating plate 51, this is given by way of example, and the vertically vibrating plate 51 may be horizontally oriented when a smallest radius point of the cam member 52 comes into contact with the vertically vibrating plate 51.

To allow the vertically vibrating plate 51 to be positively vibrated up and down on an outer peripheral surface of the cam member 52, it is desirable that an elastic member 51b, such as a coil spring, be provided around the pivoting shaft 51a of the vertically vibrating plate 51. Assuming provision of the elastic member 51b, the vertically vibrating plate 51 is pushed up due to the varying radius of the cam member 52, causing elastic deformation of the elastic member 51b. Then, at a position where the cam member 52 has a sharp reduction in radius, the vertically vibrating plate 51 is rapidly lowered under the influence of elastic restoration of the elastic member 51b and the weight of the vertically vibrating plate 51. Accordingly, the vertically vibrating plate 51 can apply greater vertical vibration force to the medicine pouch P that is being transferred above the vertically vibrating plate 51.

With the fifth embodiment of the present invention as described above, shock, which is generated as the vertically vibrating plate 51 is vertically pivoted by rotation of the cam member 52, is transmitted to the medicine pouch P to enable vibration of the medicine pouch P, whereby tablets of medicine packed in the medicine pouch P can be uniformly spread.

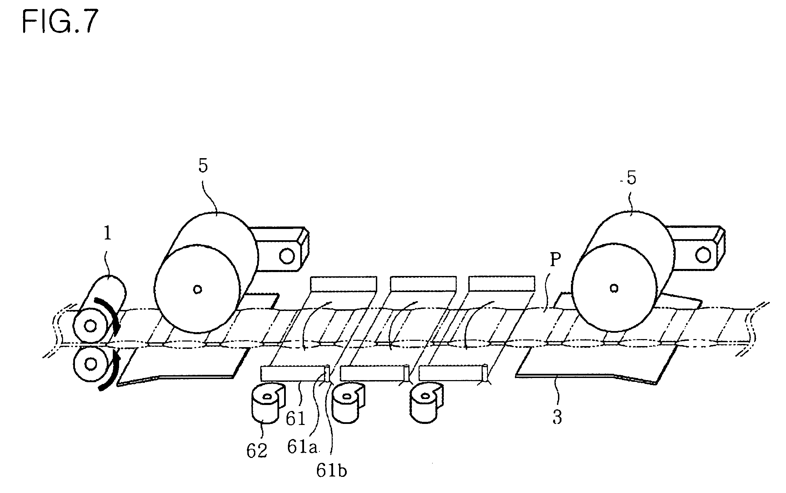

Referring to FIG. 7, similar to the medicine pouch arranging device of the previously described first embodiment, the medicine pouch arranging device according to a sixth embodiment of the present invention includes the transfer rollers 1 to transfer the medicine pouches P discharged in succession from the automatic medicine packing machine (not shown) in which a medicine is automatically packed on a per dose basis, the guide plate 3 arranged below the medicine pouches P to support the medicine pouches P that are being transferred, and the at least one vibrator to vibrate the medicine pouches P that are being transferred by applying shock to the medicine pouches P via the guide plate 3. Even in the sixth embodiment, the at least one sponge roller 5 is preferably arranged above the guide plate 3 and is used to press each of the medicine pouches P so that some vertically or obliquely erected tablets of medicine packed in the medicine pouch P are laid flat.

The medicine pouch arranging device according to the sixth embodiment differs from the medicine pouch arranging device according to the first embodiment only in view of the fact that a part of the guide plate is horizontally vibrated leftward and rightward and thus, this difference alone will be described hereinafter in detail.

In accordance with the sixth embodiment, the guide plate 3 includes at least one horizontally vibrating plate 61 adapted to be vibrated by the vibrator. The horizontally vibrating plate 61 is adapted to indirectly transmit vibration generated by the vibrator to the medicine pouches P that are being transferred. In the sixth embodiment, the horizontally vibrating plate 61 realizes arrangement of the medicine pouches P by shaking the medicine pouches P leftward and rightward in the transfer direction of the medicine pouches P.

Preferably, a plurality of the horizontally vibrating plates 61 is aligned in the transfer direction of the medicine pouches P, i.e. in the longitudinal direction of the guide plate 3. In addition, the number and position of the horizontally vibrating plates 61 are preferably equal to the number and position of the vibrator.

In accordance with the sixth embodiment, the vibrator includes a cam member 62 adapted to be rotated by a rotation driving unit, such as a motor (not shown). Differently from the cam member 11 of the first embodiment having a horizontal rotation axis, the cam member 62 according to the sixth embodiment has a vertical rotation axis.

The cam member 62 has a logarithmic spiral cross section a radius of which gradually increases. The cam member 62 comes into close contact with a side surface of the horizontally vibrating plate 61 of the guide plate 3. The horizontally vibrating plate 61 is pivotable about a pivoting shaft 61a thereof. Accordingly, as the cam member 62 is rotated, the horizontally vibrating plate 61 is pivotally vibrated leftward and rightward about the pivoting shaft 61a.

To allow the horizontally vibrating plate 61 to be positively moved following the cam member 62, it is desirable that an elastic member 61b, such as a coil spring, be provided around the pivoting shaft 61a of the horizontally vibrating plate 61. Assuming provision of the elastic member 61b, the horizontally vibrating plate 61 is pivoted laterally (i.e., rightward in FIG. 7) due to the varying radius of the cam member 62, causing elastic deformation of the elastic member 61b. Then, at a position where the cam member 62 has a sharp reduction in radius, the horizontally vibrating plate 61 is suddenly pivoted in an opposite direction by elastic restoration of the elastic member 61b. Accordingly, the horizontally vibrating plate 61 can apply greater horizontal vibration force to the medicine pouch P that is being transferred above the horizontally vibrating plate 61.

With the sixth embodiment of the present invention as described above, shock, which is generated as the horizontally vibrating plate 61 is pivoted leftward and rightward by rotation of the cam member 62, is transmitted to the medicine pouch P to enable vibration of the medicine pouch P, whereby tablets of medicine packed in the medicine pouch P can be uniformly spread.

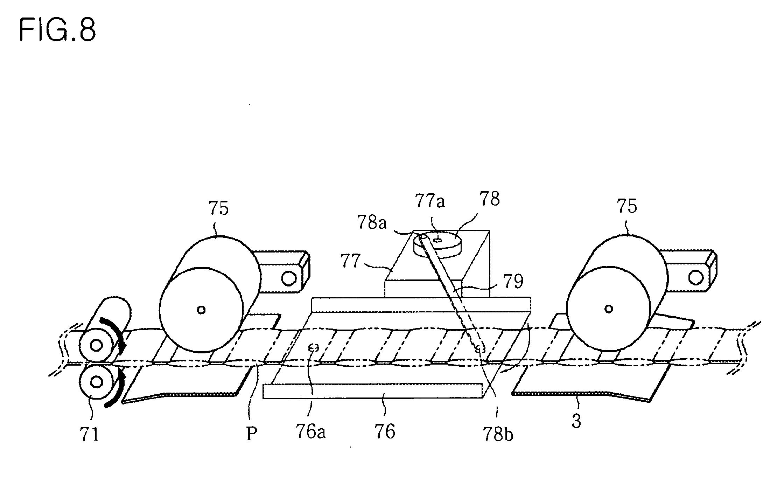

Referring to FIG. 8, the medicine pouch arranging device according to a seventh embodiment of the present invention includes transfer rollers 71 to transfer a series of medicine pouches P discharged in succession from the automatic medicine packing machine (not shown) in which a medicine is automatically packed on a per dose basis, the guide plate 3 arranged below the medicine pouches P to support the medicine pouches P that are being transferred, and the at least one vibrator connected to the guide plate 3 and used to vibrate the guide plate 3 and consequently, the medicine pouches P that are being transferred on the guide plate 3 by applying shock to the medicine pouches.

At least one sponge roller 75 is arranged above the guide plate 3 and is used to press each of the medicine pouches P so that some vertically or obliquely erected tablets of medicine packed in the medicine pouch P are laid flat. In this case, the transfer rollers 71 may be located downstream of the vibrator in the transfer direction of the medicine pouches P as shown, or may be located upstream of the vibrator. Alternatively, other transfer rollers (not shown) may be additionally arranged upstream of the vibrator. Meanwhile, the transfer rollers 71 has the same function as the transfer device 20 that is described with reference to FIG. 1 and thus, may be omitted under the assumption of provision of the transfer device 20.

In accordance with the seventh embodiment, the guide plate 3 includes at least one horizontally vibrating plate 76 adapted to be vibrated by the vibrator. The horizontally vibrating plate 76 is adapted to indirectly transmit shock generated by the vibrator to the medicine pouches P via the horizontally vibrating plate 76. The horizontally vibrating plate 76 of the guide plate 3 is horizontally vibrated leftward and rightward in the transfer direction of the medicine pouches P about a fixed shaft 76a thereof.

The horizontally vibrating plate 76 is oriented in the transfer direction of the medicine pouches P, i.e. in the longitudinal direction of the guide plate 3. Preferably, a plurality of the horizontally vibrating plates 76 may be aligned in the longitudinal direction of the guide plate 3.

In accordance with the seventh embodiment, the vibrator includes a motor 77 as a drive source, a rotating member 78 coupled to a drive shaft 77a of the motor 77 so as to be rotated along with the drive shaft 77a, and a link member 79 one end of which is rotatably connected to the rotating member 78 via a first connecting shaft 78a and the other end of which is rotatably connected to the horizontally vibrating plate 76 of the guide plate 3 via a second connecting shaft 78b.

Since the horizontally vibrating plate 76 is installed to be pivotally vibrated leftward and rightward about the fixed shaft 76a, the horizontally vibrating plate 76 can be pivotally vibrated leftward and rightward as the link member 79 transmits rotation driving force of the motor 77 to the horizontally vibrating plate 76.

Assuming provision of a plurality of horizontally vibrating plates 76, each of the horizontally vibrating plates 76 may be provided with the vibrator, or only one vibrator may be used to vibrate the plurality of horizontally vibrating plates 76.

With the seventh embodiment of the present invention as described above, pivotal vibration force of the horizontally vibrating plate 76 generated by the vibrator is transmitted to the medicine pouch P to enable vibration of the medicine pouch P, whereby tablets of medicine packed in the medicine pouch P can be uniformly spread.

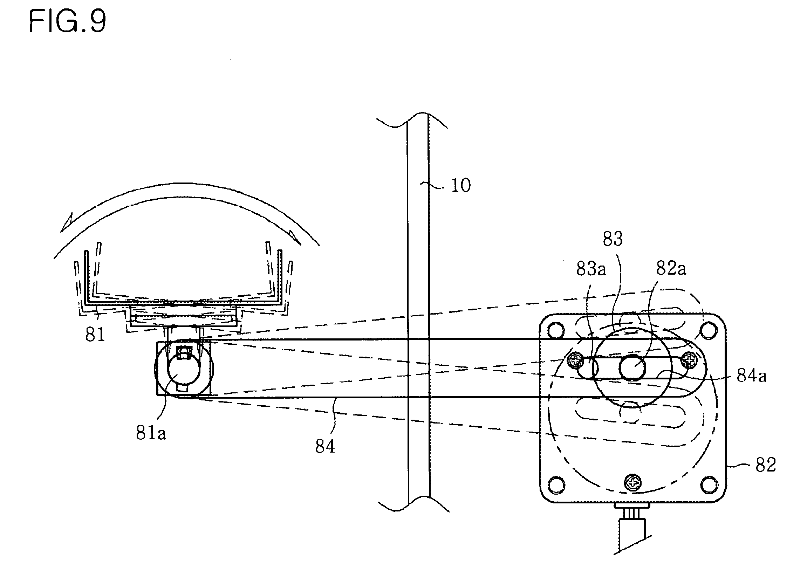

Referring to FIG. 9, similar to the medicine pouch arranging device according to the above described seventh embodiment, the medicine pouch arranging device according to an eighth embodiment of the present invention includes the transfer rollers 71 to transfer the medicine pouches P discharged in succession from the automatic medicine packing machine (not shown) in which a medicine is automatically packed on a per dose basis, the guide plate 3 arranged below the medicine pouches P to support the medicine pouches P that are being transferred, and the at least one vibrator connected to the guide plate 3 and used to vibrate the guide plate 3 and consequently, the medicine pouches P that are being transferred on the guide plate 3 by applying shock to the medicine pouches P. Even in the eighth embodiment, the at least one sponge roller 75 is preferably arranged above the guide plate 3 and is used to press each of the medicine pouches P so that some vertically or obliquely erected tablets of medicine packed in the medicine pouch P are laid flat.

Differently from the medicine pouch arranging device of the seventh embodiment in which a part of the guide plate 3 is horizontally vibrated leftward and rightward, the medicine pouch arranging device according to the eighth embodiment vibrates a part of the guide plate 3 leftward and rightward by horizontal rolling and thus, this difference alone will be described hereinafter in detail.

In accordance with the eighth embodiment, the guide plate 3 includes a rolling vibrating plate 81 adapted to perform a rolling motion by the vibrator. The vibrator is adapted to indirectly transmit shock to the medicine pouch P via the rolling vibrating plate 81. The rolling vibrating plate 81 of the guide plate 3 is installed to perform a rolling motion, so that the rolling vibrating plate 81 is tilted leftward and rightward about a fixed shaft 81a that extends in a direction parallel to the transfer direction of the medicine pouches P.

In accordance with the eighth embodiment, the vibrator includes a motor 82 as a drive source, a rotating member 83 coupled to a drive shaft 82a of the motor 82 so as to be rotated along with the drive shaft 82a, and a link member 84 one end of which is connected to the rotating member 83 via a boss 83a and the other end of which is coupled to the rolling vibrating plate 81 of the guide plate 3. The link member 84 is pivotable about the fixed shaft 81a.

As shown in FIG. 9, an end portion of the link member 84 having an approximately L-shaped cross section (i.e. a distal end portion of the link member 84 toward the motor 82) is formed with an elongated hole 84a, into which the boss 83a is inserted. As the rotating member 83 is rotated by the motor 82, the boss 83a slides in the elongated hole 84a and the link member 84 is pivotally vibrated about the fixed shaft 81a within a predetermined angular range.

Assuming provision of a plurality of rolling vibrating plates 81, each of the rolling vibrating plates 81 may be provided with the vibrator, or only one vibrator may be used to vibrate the plurality of rolling vibrating plates 81.

With the eighth embodiment of the present invention as described above, shock, which is generated as the rolling vibrating plate 81 is pivotally vibrated by the vibrator, is transmitted to the medicine pouch P to enable vibration of the medicine pouch P, whereby tablets of medicine packed in the medicine pouch P can be uniformly spread.

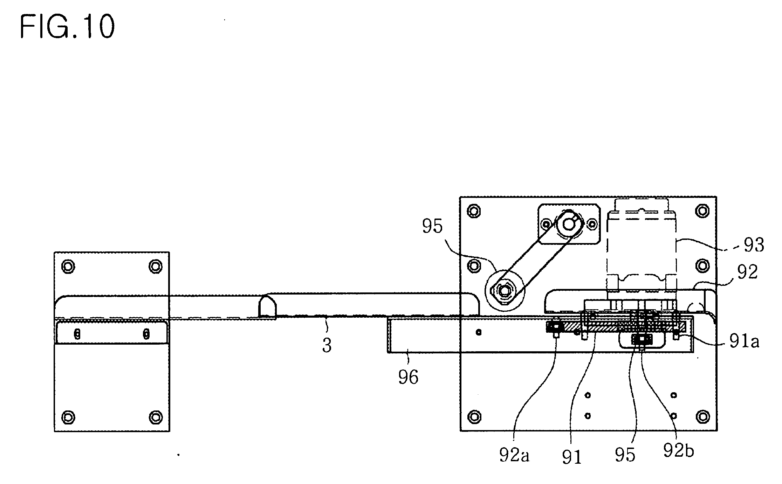

Referring to FIGS. 10 to 12, similar to the medicine pouch arranging device according to the above described seventh embodiment, the medicine pouch arranging device according to a ninth embodiment of the present invention includes the transfer rollers 71 to transfer the medicine pouches P discharged in succession from the automatic medicine packing machine (not shown) in which a medicine is automatically packed on a per dose basis, the guide plate 3 arranged below the medicine pouches P to support the medicine pouches P that are being transferred, and the at least one vibrator connected to the guide plate 3 and used to vibrate the guide plate 3 and consequently, the medicine pouches P that are being transferred on the guide plate 3 by applying shock to the medicine pouches P. Even in the ninth embodiment, the at least one sponge roller 75 is preferably arranged above the guide plate 3 and is used to press each of the medicine pouches P so that some vertically or obliquely erected tablets of medicine packed in the medicine pouch P are laid flat.

Although the medicine pouch arranging device according to the ninth embodiment is similar to the medicine pouch arranging device according to the above described seventh embodiment in view of the fact that a part of the guide plate 3 is horizontally vibrated leftward and rightward, the medicine pouch arranging device of the ninth embodiment adopts a link member 95 and a horizontally vibrating member 91 differently from the medicine pouch arranging device of the seventh embodiment using only the link member 84 (see FIG. 8) and thus, this difference alone will be described hereinafter in detail.

In accordance with the ninth embodiment, the guide plate 3 includes a horizontally vibrating plate 92 adapted to be vibrated by the vibrator. The vibrator is adapted to indirectly transmit shock to the medicine pouch P via the horizontally vibrating plate 92. The horizontally vibrating plate 92 of the guide plate 3 is installed to be horizontally vibrated leftward and rightward in the transfer direction of the medicine pouch P about a fixed shaft 92a that is coupled to a frame 96.

In accordance with the ninth embodiment, the vibrator includes a motor 93 as a drive source, a rotating member 94 coupled to a drive shaft 93a of the motor 93 so as to be rotated along with the drive shaft 93a, and a link member 95 one end of which is rotatably connected to the rotating member 94 via a first connecting shaft 94a and the other end of which is rotatably connected to the horizontally vibrating plate 92 via a second connecting shaft 92b.

A horizontally vibrating member 91 is integrally coupled with the horizontally vibrating plate 92 at a lower side of the horizontally vibrating plate 92, so that the other end of the link member 95 is connected to the horizontally vibrating member 91 via the above described second connecting shaft 92b.

The horizontally vibrating member 91 has one or more bosses 91a arranged in a longitudinal direction thereof, and the frame 96 has one or more arc-shaped recesses 96a into which the bosses 91a are inserted. The arc-shaped recess 96a guides movement of the boss 91a, to stably maintain vibration of the horizontally vibrating plate 92.

The horizontally vibrating plate 92 is installed to be pivotally vibrated leftward and rightward about the fixed shaft 92a. Accordingly, as rotation driving force of the motor 93 is transmitted to the horizontally vibrating plate 92 through the link member 95 and the horizontally vibrating member 91, the horizontally vibrating plate 92 can be vibrated leftward and rightward.

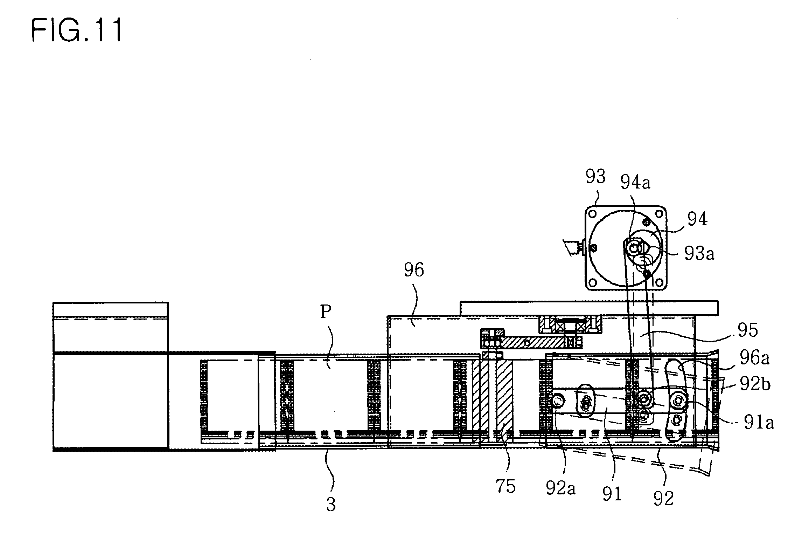

Although FIGS. 10 and 11 illustrate the single horizontally vibrating plate 92 as being vibrated by the single vibrator, of course, the present invention has no limit in the installation number of the horizontally vibrating plate 92 or the vibrator. Assuming provision of a plurality of horizontally vibrating plates 92, each of the horizontally vibrating plates 92 may be provided with the vibrator, or only one vibrator may be used to vibrate the plurality of horizontally vibrating plates 92.

With the ninth embodiment of the present invention as described above, shock, which is generated as the horizontally vibrating plate 92 is pivotally vibrated by the vibrator, is transmitted to the medicine pouch P to enable vibration of the medicine pouch P, whereby tablets of medicine packed in the medicine pouch P can be uniformly spread.

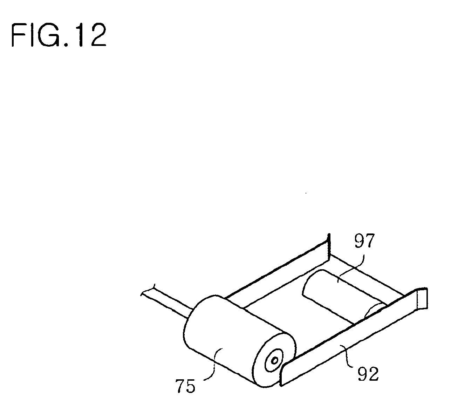

In addition, as shown in FIG. 12, the horizontally vibrating plate 92 is formed at an upper surface thereof with a projection 97 having a semicircular cross section. When tablets of medicine in the medicine pouch P are arranged by vibration of the horizontally vibrating plate 92, the projection 97 causes the tablets passing thereabove to be collected in a given direction within the medicine pouch P.

Collecting the tablets of medicine in a given direction within the medicine pouch P by the projection 97 of the horizontally vibrating plate 92 enables more rapid inspection by the image reading device 30. The projection 97 of the ninth embodiment is also applicable to the above described seventh and eighth embodiments.

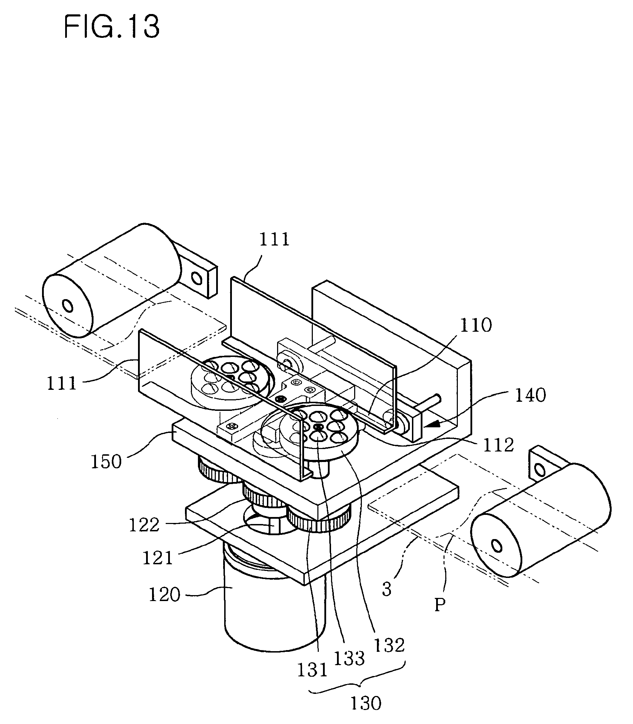

Referring to FIG. 13, the medicine pouch arranging device according to a tenth embodiment of the present invention, similar to the medicine pouch arranging device of the above described first embodiment, includes the transfer rollers 1 to transfer the medicine pouches P discharged in succession from the automatic medicine packing machine (not shown) in which a medicine is automatically packed on a per dose basis, the guide plate 3 arranged below the medicine pouches P to support the medicine pouches P that are being transferred, and the at least one vibrator to vibrate the medicine pouches P by indirectly applying shock to the medicine pouches P that are being transferred.

Even in the tenth embodiment, the at least one sponge roller 5 is preferably arranged above the guide plate 3 and is used to press each of the medicine pouches P so that some vertically or obliquely erected tablets of medicine packed in the medicine pouch P are laid flat. The medicine pouch arranging device according to the tenth embodiment differs from the medicine pouch arranging device according to the first embodiment only in view of the guide plate and the vibrator and thus, these differences alone will be described hereinafter in detail.

FIGS. 13 to 15 illustrate important parts of the medicine pouch arranging device according to the tenth embodiment. In accordance with the tenth embodiment, the guide plate 3 includes a horizontally swinging plate 110 to be horizontally vibrated leftward and rightward by the vibrator. In addition, the vibrator includes a rotation unit 130 adapted to be rotated by a drive motor 120, the rotation unit 130 penetrating through a hole 112 of the horizontally swinging plate 110, and a vibration applying unit 140 adapted to be rotated by the drive motor 120 so as to vibrate the horizontally swinging plate 110.

The horizontally swinging plate 110 supports the bottom of the medicine pouch P that is being transferred on the guide plate 3 and has sidewalls 111 to prevent separation of the medicine pouch P during swing vibration thereof. The horizontally swinging plate 110 performs a predetermined pattern of leftward and rightward swing vibration by the vibrator, thereby acting to shake the medicine pouch P leftward and rightward. The rotation unit 130 is coupled to the horizontally swinging plate 110, to more positively prevent tablets of medicine packed in the medicine pouch P from overlapping each other by directly applying vibration to the medicine pouch P.

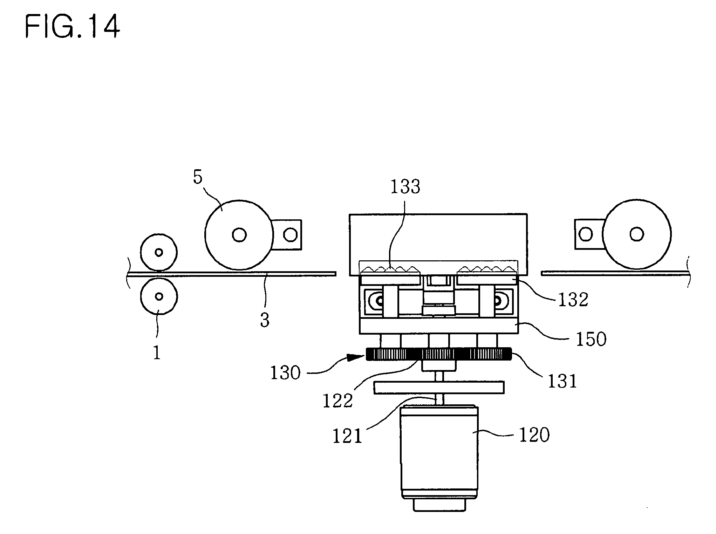

As shown in FIG. 14, the rotation unit 130 includes pinions 131 to be engaged and rotated with a center gear 122 provided at a rotating shaft 121 of the drive motor 120, and rotating plates 132 coupled to rotating shafts of the pinions 131. The rotating plates 132 are located immediately under the medicine pouch P moving on the horizontally swinging plate 110, each of the rotating plates 132 being formed at an upper surface thereof with bosses 133 to press the medicine packed in the medicine pouch P.

The drive motor 120 is provided at the bottom of the medicine pouch arranging device and provides rotation driving force. The center gear 122 is coupled to the rotating shaft 121 of the drive motor 120 and in turn, the pinions 131 are engaged with the center gear 122. In this case, the pinions 131 may include a pair of pinions arranged in the transfer direction of the medicine pouch P as shown in FIG. 14. Alternatively, a single pinion may be provided.

The rotating plates 132 are coupled to upper ends of the rotating shafts of the pinions 131 penetrating through an intermediate plate 150 and are rotated upon receiving rotation driving force of the drive motor 120. An installation height of the rotating plates 132 is determined based on a desired transfer height of the medicine pouch P. The height of the rotating plates 132 may be equal to or higher than that of a bottom surface of the guide plate 3.

The bosses 133 are formed on the upper surfaces of the rotating plates 132 to effectively apply vibration to the medicine pouch P. Although various shapes and numbers of the bosses 133 may be formed, it is desirable that six truncated cone shaped bosses be arranged radially.

In this case, a circumferential (tangential) rotation speed of the rotating plates 132 is preferably set to be faster than a movement speed of the medicine pouch P, to allow the bosses 133 of the rotating plates 132 to apply shock to tablets of medicine packed in the medicine pouch P. In addition, providing a pair of the rotating plates in the transfer direction of the medicine pouch P can assure more effective distribution of tablets of medicine packed in the medicine pouch P.

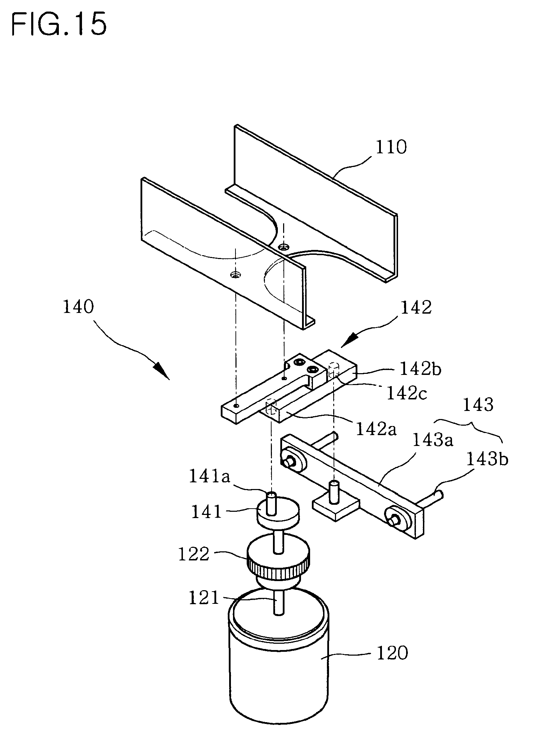

FIG. 15 is an exploded perspective view illustrating the vibration applying unit to cause swing vibration of the horizontally swinging plate. Referring to FIG. 15, the vibration applying unit 140 includes a drive plate 141, an intermediate block 142, and a slider 143. The drive shaft 141 is coupled to the rotating shaft 121 of the drive motor 120 and has a protruding shaft 141a protruding upward from the top thereof at a position offset from a center of the rotating shaft 121. The intermediate block 142 consists of a front portion 142a to which the protruding shaft 141a is rotatably coupled, and a rear portion 142b having a rotation hole 142c. An upper end of the intermediate block 142 is coupled to the horizontally swinging plate 110. The slider 143 is rotatably coupled to the intermediate block 142 via the rotation hole 142c. The slider 143 is placed in the same plane as the guide plate 3 and is freely rectilinearly movable in a direction perpendicular to the transfer direction of the medicine pouch P.

The drive plate 141 is coupled to an upper end of the rotating shaft 121 of the drive motor 120 and the protruding shaft 141a is coupled to the top of the drive plate 141 at a position offset from the center of the rotating shaft 121. Accordingly, the protruding shaft 141a is rotated circularly on the drive plate 141 during operation of the drive motor 120.

The intermediate block 142 is coupled to the center of a lower surface of the horizontally swinging plate 110. The front portion 142a is rotatably coupled at a lower surface thereof to the protruding shaft 141a and the rear portion 142b is rotatably coupled at a lower surface thereof to the slider 143 via the rotation hole 142c. With this configuration, the intermediate block 142 serves to transmit rotation driving force of the drive motor 120 located therebelow to the horizontally swinging plate 110 located thereabove.

The slider 143 includes sliding rods 143a and a movable block 143b. The sliding rods 143a are coupled to an inner wall of the medicine pouch inspection machine so as to protrude from the inner wall in a direction perpendicular to the transfer direction of the medicine pouch P. The sliding rods 143a are arranged in an imaginary plane parallel to the guide plate 3. The movable block 143b is coupled to the sliding rods 143a so as to be freely rectilinearly movable in a longitudinal direction of the sliding rods 143a.

The slider 143 is centrally provided with a coupling shaft to be rotatably fitted into the rotation hole 142c formed in the rear portion 142b of the intermediate block 142.

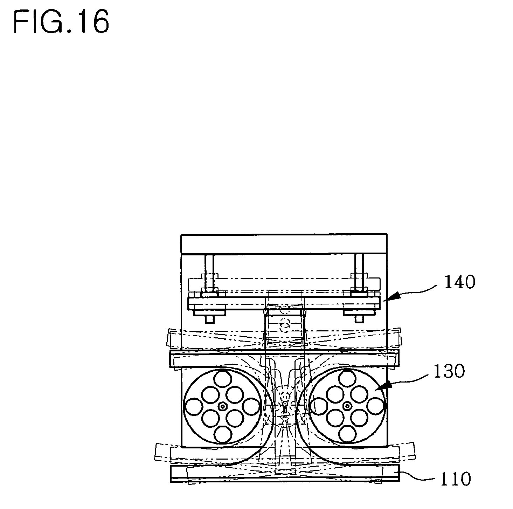

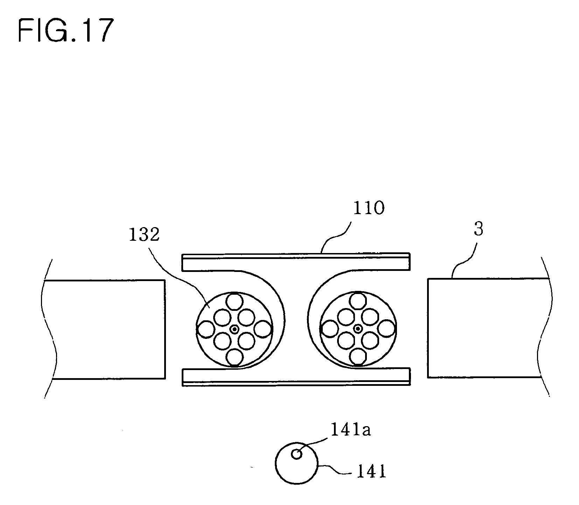

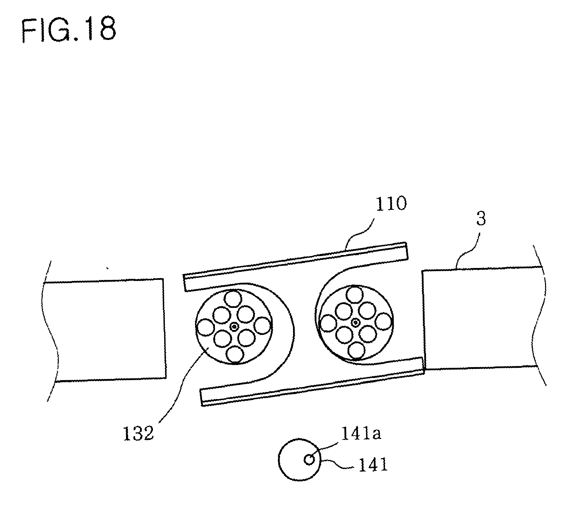

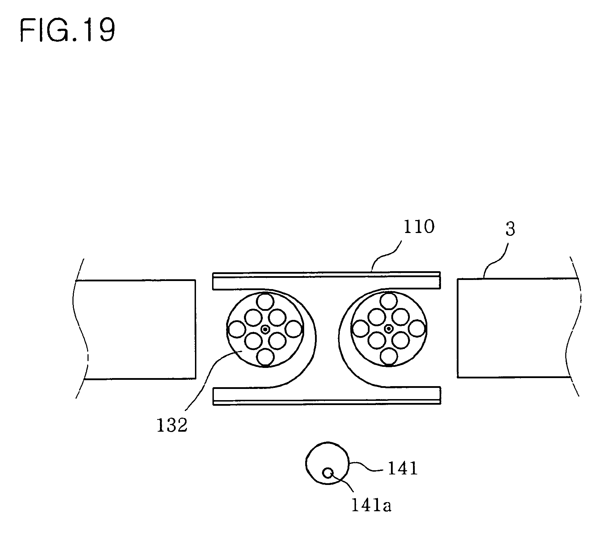

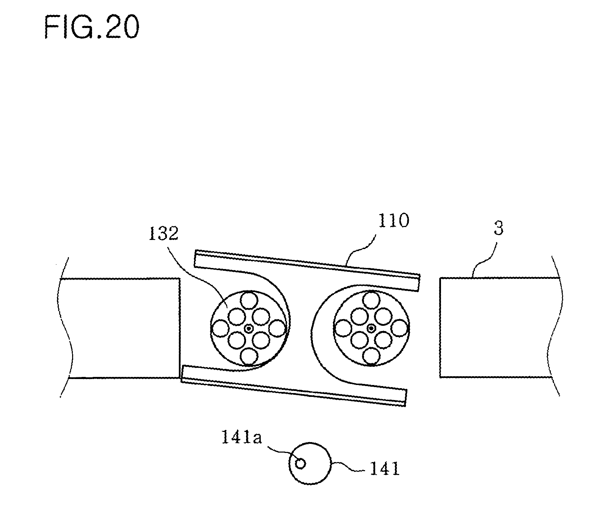

Referring to FIG. 16, the front portion 142a of the intermediate block 142 is rotated by rotation of the drive plate 141 and simultaneously, the rear portion 142b of the intermediate block 142, which is rotatably coupled to the rectilinearly movable slider 143, is rectilinearly moved in a direction perpendicular to the transfer direction of the medicine pouch P. With the above described rotation of the drive plate 141, the horizontally swinging plate 110 is vibrated as shown in FIGS. 17 to 20. More specifically, referring to FIG. 17 or 19, when the protruding shaft 141a is rotated to be positioned at the left or right side of the transfer direction of the medicine pouch P, the horizontally swinging plate 110 is aligned with the transfer direction of the medicine pouch P to rectilinearly move the medicine pouch P. On the other hand, referring to FIG. 18, when the protruding shaft 141a is rotated to be positioned at the front or rear side of the transfer direction of the medicine pouch P, the horizontally swinging plate 110 is slightly rotated leftward or rightward. Since the drive plate 141 is rotated in succession, as shown in FIGS. 17 to 20, the horizontally swinging plate 110 successively performs horizontal vibration and alternate leftward or rightward rotation, exhibiting a complex swing behavior. In addition to performing the swing behavior, as described above, the horizontally swinging plate 110 transmits vibration force generated by the rotation unit 130 to the medicine pouch P, thereby more effectively preventing tablets of medicine packed in the medicine pouch P from overlapping each other.

As is apparent from the above description, according to the present invention, when a medicine pouch, in which tablets of medicine have been completely packed, is transferred to an inspection device, shock or vibration is directly applied to the medicine pouch, whereby the tablets of medicine packed in the medicine pouch can be uniformly spread. This allows an inspector to easily inspect the tablets of medicine packed in the medicine pouch by use of the inspection device such as an image reading device, thereby enabling accurate inspection to determine whether a correct medicine is packed in the medicine pouch when a variety of medicines is automatically packed.

Although the preferred embodiments of the medicine discharge device according to the present invention have been disclosed for illustrative purposes, those skilled in the art will appreciate that various modifications, additions and substitutions are possible, without departing from the scope of the invention as disclosed in the accompanying claims.

## Claims

1. A medicine pouch arranging device (40) to uniformly spread tablets of medicine packed in a series of medicine pouches (P), which have been automatically packed on a per dose basis and successively discharged from an automatic medicine packing machine, so as to inspect whether a correct medicine is packed in each of the medicine pouches (P), the medicine pouch arranging device (40) comprising:
a transfer roller (1) to transfer the medicine pouches discharged from the automatic medicine packing machine;
a guide plate (3) to support the medicine pouches that are being transferred thereon, the guide plate having at least one opening (4);
a vibrator to vibrate each of the medicine pouches that are being transferred on the guide plate by applying shock or vibration to the medicine pouch (P); and
a sponge roller (5) arranged above the guide plate to press each of the medicine pouches so that some vertically or obliquely erected tablets of medicine packed in the medicine pouch are laid flat.

2. The device according to claim 1, wherein:
the vibrator includes a cam member (11) having an elliptical cross section and adapted to be rotated upon receiving driving force; and
the cam member (11) passes through the opening (4) of the guide plate along a major axis thereof while being rotated, vibrating the medicine pouch (P) by coming into direct contact with the medicine pouch.

3. The device according to claim 1, wherein:
the vibrator includes:
an air cylinder (21) adapted to be reciprocally driven up and down; and
a pivoting member (23) adapted to be pivoted about a pivoting shaft (22) by the air cylinder; and
one end of the pivoting member (23) is connected to the air cylinder, and the other end of the pivoting member is formed with a boss (24) to come into direct contact with the medicine pouch so as to vibrate the medicine pouch.

4. The device according to claim 1, wherein:
the vibrator includes an air nozzle (31) to successively eject air toward the medicine pouch at a predetermined pressure or to vary an ejection pressure of air in a predetermined pattern under control; and
the sponge roller (5) is located downstream of the air nozzle to lay down the vertically or obliquely erected tablets of medicine by pressure of the air ejected from the air nozzle.

5. The device according to claim 1, wherein:
the guide plate (3) includes at least one vertically vibrating plate (51) adapted to be vertically pivoted about a pivoting shaft (51a);
the vibrator is used to vibrate the vertically vibrating plate (51) and includes a cam member (52) arranged to come into close contact with a lower surface of the vertically vibrating plate and adapted to be rotated about a horizontally extending rotating shaft, the cam member (52) having a logarithmic spiral cross section a radius of which gradually increases; and
an elastic member (51b) is provided around the pivoting shaft.

6. The device according to claim 1, wherein:
the guide plate (3) includes at least one horizontally vibrating plate (61) adapted to be pivoted leftward and rightward about a pivoting shaft (61a) in a transfer direction of the medicine pouch;
the vibrator is used to vibrate the horizontally vibrating plate (61) and includes a cam member (62) arranged to come into close contact with a side surface of the horizontally vibrating plate and adapted to be rotated about a vertically extending rotating shaft, the cam member (62) having a logarithmic spiral cross section a radius of which gradually increases; and
an elastic member (61b) is provided around the pivoting shaft.

7. The device according to claim 1, wherein:
the guide plate (3) includes a horizontally vibrating plate (76) adapted to be horizontally vibrated leftward and rightward; and
the vibrator is used to vibrate the horizontally vibrating plate (76) and includes a motor (77) as a drive source, a rotating member (78) adapted to be rotated by the motor, and a link member (79) to connect the rotating member and the horizontally vibrating plate to each other.

8. The device according to claim 7, wherein one end of the link member (79) is rotatably connected to the rotating member (78) via a first connecting shaft (78a) and the other end of the link member is rotatably connected to the horizontally vibrating plate via a second connecting shaft (78b).

9. The device according to claim 7, wherein:
a horizontally vibrating member (91) is arranged below the horizontally vibrating plate (92) and is integrally coupled with the horizontally vibrating plate; and
one end of the link member (95) is rotatably connected to the rotating member (94) via a first connecting shaft (94a) and the other end of the link member is rotatably connected to the horizontally vibrating member (91) via a second connecting shaft (92b).

10. The device according to claim 9, wherein:
the horizontally vibrating plate (92) is horizontally vibrated leftward and rightward about a fixed shaft (92a) coupled to a frame (96); and
the horizontally vibrating member (91) has one or more bosses (91a) formed in a longitudinal direction thereof, and the frame has one or more arc-shaped recesses (96a) into which the bosses are inserted.

11. The device according to claim 7, wherein the horizontally vibrating plate (92) is formed at an upper surface thereof with a projection (97), so that the tablets of medicine packed in the medicine pouch are collected into a given direction by passing over the projection.

12. The device according to claim 1, wherein the guide plate (3) includes a rolling vibrating plate (81) to perform a rolling motion by the vibrator so as to be tilted leftward and rightward in the transfer direction of the medicine pouch.

13. The device according to claim 12, wherein the vibrator includes a motor (82) as a drive source, a rotating member (83) adapted to be rotated by the motor, and a link member (84) to connect the rotating member and the rolling vibrating plate to each other.

14. The device according to claim 13, wherein:
one end of the link member (84) is connected to the rotating member via a boss (83a), and the other end of the link member is fixed to the rolling vibrating plate (81); and
the link member is pivotable about a fixed shaft (81a) and an elongated hole (84a) is formed in one end of the link member so that the boss is slidably inserted into the elongated hole.

15. The device according to claim 1, wherein:
the guide plate (3) includes a horizontally swinging plate (110) adapted to be horizontally vibrated leftward and rightward by the vibrator; and
the vibrator includes:
a rotation unit adapted to be rotated by a drive motor (120) and penetrating through a hole (112) formed in the horizontally swinging plate; and
a vibration applying unit (140) adapted to be rotated by the drive motor (120) so as to vibrate the horizontally swinging plate (110).

16. The device according to claim 15, wherein the rotation unit includes:
a pinion (131) adapted to be engaged and rotated with a center gear (122) provided at a rotating shaft (121) of the drive motor (120); and
a rotating plate (132) coupled to a rotating shaft of the pinion and located at a lower end of the medicine pouch moving on the horizontally swinging plate, the rotating plate being formed at an upper surface thereof with a boss (133) to press the tablets of medicine packed in the medicine pouch.

17. The device according to claim 15, wherein the vibration applying unit (140) includes:
a drive shaft (141) coupled to the rotating shaft (121) of the drive motor and having a protruding shaft (141a) protruding upward therefrom at a position offset from a center of the rotating shaft;
an intermediate block (142) having a front portion rotatably coupled to the protruding shaft and a rear portion formed with a rotation hole (142c), the intermediate block being coupled at an upper surface thereof to the guide plate; and
a slider (143) rotatably coupled to the rotation hole (142c) and adapted to be freely rectilinearly moved in a direction perpendicular to the transfer direction of the medicine pouch in the same plane as the guide plate.

## Patentansprüche

1. Vorrichtung (40) zum Anordnen von Medikamentenbeuteln, um in einer Reihe von Medikamentenbeuteln (P) verpackte Medikamententabletten, die auf einer Pro-Dosis-Basis automatisch verpackt und aufeinanderfolgend aus einer automatischen Medikamentenverpackungsmaschine ausgegeben wurden, einheitlich zu verteilen, um zu prüfen, ob in jedem der Medikamentenbeutel ein korrektes Medikament verpackt ist, wobei die Vorrichtung (40) zum Anordnen von Medikamentenbeuteln umfasst:
eine Beförderungswalze (1) zum Befördern der Medikamentenbeutel, die aus der automatischen Medikamentenverpackungsmaschine ausgegeben werden;
eine Führungsplatte (3) zum Tragen der Medikamentenbeutel, die darauf befördert werden, wobei die Führungsplatte zumindest eine Öffnung (4) aufweist;
einen Rüttler zum Rütteln von jedem der Medikamentenbeutel, die auf der Führungsplatte befördert werden, indem der Medikamentenbeutel (P) einem Stoß oder eine Rüttlung ausgesetzt wird; und
eine Schwammwalze (5), die über der Führungsplatte angeordnet ist, um jeden der Medikamentenbeutel zu pressen, so dass einige in dem Medikamentenbeutel verpackte, vertikal oder schräg aufgestellte Medikamententabletten flach gelegt werden.

2. Vorrichtung nach Anspruch 1, wobei:
der Rüttler ein Nockenelement (11) mit einem elliptischen Querschnitt enthält, das eingerichtet ist, um unter Einwirkung einer Antriebskraft gedreht zu werden; und
das Nockenelement (11) die Öffnung (4) der Führungsplatte entlang einer Hauptachse davon während der Drehung passiert, wobei es den Medikamentenbeutel (P) rüttelt, indem es mit dem Medikamentenbeutel in direkten Kontakt gelangt.

3. Vorrichtung nach Anspruch 1, wobei der Rüttler enthält:
einen Luftzylinder (21), der eingerichtet ist, um reziprok nach oben und unten getrieben zu werden; und
ein Schwenkelement (23), das eingerichtet ist, um vom Luftzylinder um eine Schwenkachse (22) geschwenkt zu werden; und
ein Ende des Schwenkelements (23) mit dem Luftzylinder verbunden ist, und das andere Ende des Schwenkelements mit einer Erhebung (24) gebildet ist, um mit dem Medikamentenbeutel in direkten Kontakt zu gelangen, so dass der Medikamentenbeutel gerüttelt wird.

4. Vorrichtung nach Anspruch 1, wobei:
der Rüttler eine Luftdüse (31) enthält, um Luft sukzessive in einem vorab definierten Druck in Richtung Medikamentenbeutel auszustoßen oder um einen Luftausstoßdruck in einem vorab definierten Muster unter Kontrolle zu variieren; und
die Schwammwalze (5) der Luftdüse nachgeschaltet angeordnet ist, um die vertikal oder schräg aufgestellten Medikamententabletten durch aus der Luftdüse ausgestoßenen Luftdruck niederzulegen.

5. Vorrichtung nach Anspruch 1, wobei:
die Führungsplatte (3) zumindest eine vertikal rüttelnde Platte (51) enthält, die eingerichtet ist, um vertikal um eine Schwenkachse (51a) geschwenkt zu werden;
der Rüttler verwendet wird, um die vertikal rüttelnde Platte (51) zu rütteln, und ein Nockenelement (52) enthält, das angeordnet ist, um mit einer Unterseite der vertikal rüttelnden Platte in engen Kontakt zu gelangen, und eingerichtet ist, um um eine sich horizontal erstreckende Drehwelle gedreht zu werden, wobei das Nockenelement (52) einen logarithmischen spiralförmigen Querschnitt aufweist, wobei ein Radius davon schrittweise zunimmt; und
ein elastisches Element (51b) um die Schwenkachse vorgesehen ist.

6. Vorrichtung nach Anspruch 1, wobei:
die Führungsplatte (3) zumindest eine horizontal rüttelnde Platte (61) enthält, die eingerichtet ist, um nach links und nach rechts um eine Schwenkachse (61a) in einer Beförderungsrichtung des Medikamentenbeutels geschwenkt zu werden;
der Rüttler verwendet wird, um die horizontal rüttelnde Platte (61) zu rütteln, und ein Nockenelement (62) enthält, das angeordnet ist, um mit einer Seitenfläche der horizontal rüttelnden Platte in engen Kontakt zu gelangen und eingerichtet ist, um um eine sich vertikal erstreckende Drehwelle gedreht zu werden, wobei das Nockenelement (62) einen logarithmischen spiralförmigen Querschnitt aufweist, wobei ein Radius davon schrittweise zunimmt; und
ein elastisches Element (61b) um die Schwenkachse vorgesehen ist.

7. Vorrichtung nach Anspruch 1, wobei:
die Führungsplatte (3) eine horizontal rüttelnde Platte (76) enthält, die eingerichtet ist, um horizontal nach links und nach rechts gerüttelt zu werden; und
der Rüttler verwendet wird, um die horizontal rüttelnde Platte (76) zu rütteln, und einen Motor (77) als Antriebsquelle, ein Drehelement (78), das eingerichtet ist, um vom Motor gedreht zu werden, und ein Verbindungselement (79) zum gegenseitigen Verbinden des Drehelements und der horizontal rüttelnden Platte enthält.

8. Vorrichtung nach Anspruch 7, wobei ein Ende des Verbindungselements (79) über eine erste Verbindungswelle (78a) mit dem Drehelement (78) drehbar verbunden ist, und wobei das andere Ende des Verbindungselements über eine zweite Verbindungswelle (78b) mit der horizontal rüttelnden Platte drehbar verbunden ist.

9. Vorrichtung nach Anspruch 7, wobei:
ein horizontal rüttelndes Element (91) unter der horizontal rüttelnden Platte (92) angeordnet und mit der horizontal rüttelnden Platte integral verbunden ist; und
ein Ende des Verbindungselements (95) über eine erste Verbindungswelle (94a) mit dem Drehelement (94) drehbar verbunden ist, und das andere Ende des Verbindungselements über eine zweite Verbindungswelle (92b) mit dem horizontal rüttelnden Element (91) drehbar verbunden ist.

10. Vorrichtung nach Anspruch 9, wobei:
die horizontal rüttelnde Platte (92) horizontal nach links und nach rechts um eine fest montierte Welle (92a), die mit einem Rahmen (96) verbunden ist, gerüttelt wird; und
das horizontal rüttelnde Element (91) eine oder mehrere Erhebungen (91a) aufweist, die in einer Längsrichtung davon gebildet sind, und der Rahmen eine oder mehrere bogenförmigen Vertiefungen (96a) aufweist, in die die Erhebungen eingesetzt werden.

11. Vorrichtung nach Anspruch 7, wobei die horizontal rüttelnde Platte (92) an einer Oberseite davon mit einem Vorsprung (97) gebildet ist, so dass die im Medikamentenbeutel verpackten Medikamententabletten in einer bestimmten Richtung gesammelt werden, indem sie über den Vorsprung passieren.

12. Vorrichtung nach Anspruch 1, wobei die Führungsplatte (3) eine Walzrüttelplatte (81) enthält, um durch den Rüttler eine Rollbewegung auszuführen, um nach links und nach rechts in die Beförderungsrichtung des Medikamentenbeutels geneigt zu werden.

13. Vorrichtung nach Anspruch 12, wobei der Rüttler einen Motor (82) als Antriebsquelle, ein Drehelement (83), das eingerichtet ist, um vom Motor gedreht zu werden, und ein Verbindungselement (84) zum gegenseitigen Verbinden des Drehelements und der Walzrüttelplatte enthält.

14. Vorrichtung nach Anspruch 13, wobei:
ein Ende des Verbindungselements (84) über eine Erhebung (83a) mit dem Drehelement verbunden ist, und das andere Ende des Verbindungselements an der Walzrüttelplatte (81) befestigt ist; und
das Verbindungselement um eine fest montierte Welle (81a) schwenkbar ist, und ein längliches Loch (84a) in einem Ende des Verbindungselements gebildet ist, so dass die Erhebung verschiebbar in das längliche Loch eingesetzt wird.

15. Vorrichtung nach Anspruch 1, wobei:
die Führungsplatte (3) eine horizontal schwingende Platte (110) enthält, die eingerichtet ist, um vom Rüttler horizontal nach links und nach rechts gerüttelt zu werden; und
der Rüttler enthält:
eine Dreheinheit, die eingerichtet ist, um von einem Antriebsmotor (120) gedreht zu werden, und ein in der horizontal schwingenden Platte gebildetes Loch (112) penetriert; und
eine Einheit (140) zum Anlegen einer Rüttelbewegung, die eingerichtet ist, um vom Antriebsmotor (120) gedreht zu werden, so dass die horizontal schwingende Platte (110) gerüttelt wird.

16. Vorrichtung nach Anspruch 15, wobei die Dreheinheit enthält:
einen Ritzel (131), der eingerichtet ist, um mit einem Sonnenrad (122) in Eingriff zu gelangen und gedreht zu werden, das an einer Drehwelle (121) des Antriebsmotors (120) vorgesehen ist; und
eine Drehplatte (132), die mit einer Drehwelle des Ritzels verbunden und an einem unteren Ende des Medikamentenbeutels, sich auf der horizontal schwingenden Platte bewegend, angeordnet ist, wobei die Drehplatte an einer Oberseite davon mit einer Erhebung (133) gebildet ist, um die im Medikamentenbeutel verpackten Medikamententabletten zu pressen.

17. Vorrichtung nach Anspruch 15, wobei die Einheit (140) zum Anlegen einer Rüttelbewegung enthält.
eine Antriebswelle (141), die mit der Drehwelle (121) des Antriebsmotors verbunden ist und eine vorstehende Welle (141a) aufweist, die in einer von einer Mitte der Drehwelle versetzten Position davon nach oben vorsteht;
einen Zwischenblock (142) mit einem vorderen Abschnitt, der mit der vorstehenden Welle drehbar verbunden ist, und einem hinteren Abschnitt, der mit einer Drehöffnung (142c) gebildet ist, wobei der Zwischenblock an einer Oberseite davon mit der Führungsplatte verbunden ist; und
einen Schieber (143), der mit der Drehöffnung (142c) drehbar verbunden und eingerichtet ist, um in einer Richtung normal zur Beförderungsrichtung des Medikamentenbeutels in der gleichen Ebene wie die Führungsplatte frei geradlinig bewegt zu werden.

## Revendications

1. Dispositif d'agencement d'un sachet de médicaments (40) pour répartir uniformément des comprimés de médicament emballés dans une série de sachets de médicaments (P), qui ont été automatiquement emballés sur une base de dose et déchargés successivement d'une machine d'emballage de médicaments automatique, afin de contrôler si un médicament correct est emballé dans chacun des sachets de médicaments (P), le dispositif d'agencement d'un sachet de médicaments (40) comprenant :
un rouleau de transfert (1) pour transférer les sachets de médicaments déchargés de la machine d'emballage de médicaments automatique ;
une plaque de guidage (3) pour supporter les sachets de médicaments qui ont été transférés sur cette dernière, la plaque de guidage ayant au moins une ouverture (4) ;
un vibrateur pour faire vibrer chacun des sachets de médicaments qui a été transféré sur la plaque de guidage en appliquant un choc ou des vibrations sur le sachet de médicaments (P) ; et
un rouleau en éponge (5) agencé au-dessus de la plaque de guidage pour comprimer chacun des sachets de médicaments de sorte que certains comprimés de médicament installés verticalement ou obliquement emballés dans le sachet de médicaments sont posés à plat.

2. Dispositif selon la revendication 1, dans lequel :
le vibrateur comprend un élément de came (11) ayant une section transversale elliptique et adapté pour être entraîné en rotation après avoir reçu une force d' entraînement ; et
l'élément de came (11) passe à travers l'ouverture (4) de la plaque de guidage le long de son axe principal tout en étant entraîné en rotation, faisant vibrer le sachet de médicaments (P) en venant en contact direct avec le sachet de médicaments.

3. Dispositif selon la revendication 1, dans lequel :
le vibrateur comprend :
un cylindre pneumatique (21) adapté pour être entraîné selon un mouvement de va-et-vient en haut et en bas ; et
un élément pivotant (23) adapté pour être pivoté autour d'un arbre pivotant (22) par le cylindre pneumatique ; et
une extrémité de l'élément pivotant (23) est raccordée au cylindre pneumatique, et l'autre extrémité de l'élément pivotant est formée avec un bossage (24) pour venir en contact direct avec le sachet de médicaments afin de faire vibrer le sachet de médicaments.

4. Dispositif selon la revendication 1, dans lequel :
le vibrateur comprend une buse d'air (31) pour éjecter successivement l'air vers le sachet de médicaments à une pression prédéterminée ou pour modifier une pression d'éjection d'air selon un modèle prédéterminé sous contrôle ; et
le rouleau en éponge (5) est positionné en aval de la buse d'air pour poser les comprimés de médicaments installés verticalement ou obliquement par la pression de l'air éjecté par la buse d'air.

5. Dispositif selon la revendication 1, dans lequel :
la plaque de guidage (3) comprend au moins une plaque vibrant verticalement (51) adaptée pour être pivotée verticalement autour d'un arbre pivotant (51a) ;
le vibrateur est utilisé pour faire vibrer la plaque vibrant verticalement (51) et comprend un élément de came (52) agencé pour venir en contact immédiat avec une surface inférieure de la plaque vibrant verticalement et adapté pour être entraîné en rotation autour d'un arbre de rotation s'étendant horizontalement, l'élément de came (52) ayant une section transversale en spirale logarithmique dont un rayon augmente progressivement ; et
un élément élastique (51 b) est prévu autour de l'arbre pivotant.

6. Dispositif selon la revendication 1, dans lequel :
la plaque de guidage (3) comprend au moins une plaque vibrant horizontalement (61) adaptée pour être pivotée vers la gauche et la droite autour d'un arbre pivotant (61a) dans une direction de transfert du sachet de médicaments ;
le vibrateur est utilisé pour faire vibrer la plaque vibrant horizontalement (61) et comprend un élément de came (62) agencé pour venir en contact immédiat avec une surface latérale de la plaque vibrant horizontalement et adapté pour être entraîné en rotation autour d'un arbre de rotation s'étendant verticalement, l'élément de came (62) ayant une section transversale en spirale logarithmique, dont un rayon augmente progressivement ; et
un élément élastique (61 b) est prévu autour de l'arbre pivotant.

7. Dispositif selon la revendication 1, dans lequel :
la plaque de guidage (3) comprend une plaque vibrant horizontalement (76) adaptée pour être vibrée horizontalement vers la gauche et vers la droite ; et
le vibrateur est utilisé pour faire vibrer la plaque vibrant horizontalement (76) et comprend un moteur (77) en tant que source d'entraînement, l'élément rotatif (78) étant adapté pour être entraîné en rotation par le moteur, et un élément de liaison (79) pour raccorder l'élément rotatif et la plaque vibrant horizontalement entre eux.

8. Dispositif selon la revendication 7, dans lequel une extrémité de l'élément de liaison (79) est raccordée en rotation à l'élément rotatif (78) via le premier arbre de raccordement (78a) et l'autre extrémité de l'élément de liaison est raccordée en rotation à la plaque vibrant horizontalement via un deuxième arbre de raccordement (78b).

9. Dispositif selon la revendication 7, dans lequel :
un élément vibrant horizontalement (91) est agencé au-dessous de la plaque vibrant horizontalement (92) et est couplé de manière solidaire avec la plaque vibrant horizontalement ; et
une extrémité de l'élément de liaison (95) est raccordée en rotation à l'élément rotatif (94) via un premier arbre de raccordement (94a) et l'autre extrémité de l'élément de liaison est raccordée en rotation à l'élément vibrant horizontalement (91) via un deuxième arbre de raccordement (92b).

10. Dispositif selon la revendication 9, dans lequel :
la plaque vibrant horizontalement (92) est vibrée horizontalement vers la gauche et vers la droite autour d'un arbre fixe (92a) couplé à un châssis (96) ; et
l'élément vibrant horizontalement (91) a un ou plusieurs bossages (91a) formés dans sa direction longitudinale, et le châssis a un ou plusieurs évidements en forme d'arc (96a) dans lesquels les bossages sont insérés.

11. Dispositif selon la revendication 7, dans lequel la plaque vibrant horizontalement (92) est formée au niveau de sa surface supérieure avec une saillie (97), de sorte que les comprimés de médicament emballés dans le sachet de médicaments sont collectés dans une direction donnée en franchissant la saillie.

12. Dispositif selon la revendication 1, dans lequel la plaque de guidage (3) comprend une plaque vibrante roulante (81) pour réaliser un mouvement de roulement par le vibrateur, afin d'être inclinée vers la gauche et vers la droite dans la direction de transfert du sachet de médicaments.

13. Dispositif selon la revendication 12, dans lequel le vibrateur comprend un moteur (82) en tant que source d'entraînement, un élément rotatif (83) adapté pour être entraîné en rotation par le moteur, et un élément de liaison (84) pour raccorder l'élément rotatif et la plaque vibrante roulante entre eux.

14. Dispositif selon la revendication 13, dans lequel :
une extrémité de l'élément de liaison (84) est raccordée à l'élément rotatif via un bossage (83a), et l'autre extrémité de l'élément de liaison est fixée à la plaque vibrante roulante (81) ; et
l'élément de liaison peut pivoter autour d'un arbre fixe (81a) et un trou allongé (84a) est formé dans une extrémité de l'élément de liaison de sorte que le bossage est inséré de manière coulissante dans le trou allongé.

15. Dispositif selon la revendication 1, dans lequel :
la plaque de guidage (3) comprend une plaque oscillant horizontalement (110) adaptée pour être vibrée horizontalement vers la gauche et vers la droite par le vibrateur ; et
le vibrateur comprend :
une unité de rotation adaptée pour être entraînée en rotation par un moteur d'entraînement (120) et pénétrant à travers un trou (112) formé dans la plaque oscillant horizontalement ; et
une unité d'application de vibration (140) adaptée pour être entraînée en rotation par le moteur d'entraînement (120) afin de faire vibrer la plaque oscillant horizontalement (110).

16. Dispositif selon la revendication 15, dans lequel l'unité de rotation comprend :
un pignon (131) adapté pour être mis en prise et entraîné en rotation avec un engrenage central (122) prévu au niveau d'un arbre rotatif (121) du moteur d'entraînement (120) ; et
une plaque rotative (132) couplée à un arbre rotatif du pignon et positionnée au niveau d'une extrémité inférieure du sachet de médicaments se déplaçant sur la plaque oscillant horizontalement, la plaque rotative étant formée au niveau de sa surface supérieure avec un bossage (133) pour comprimer les comprimés de médicaments emballés dans le sachet de médicaments.

17. Dispositif selon la revendication 15, dans lequel l'unité d'application de vibration (140) comprend :
un arbre d'entraînement (141) couplé à l'arbre rotatif (121) du moteur d'entraînement et ayant un arbre en saillie (141a) faisant saillie vers le haut à partir de ce dernier dans une position décalée par rapport à un centre de l'arbre rotatif ;
un bloc intermédiaire (142) ayant une partie avant couplée de manière rotative à l'arbre en saillie et une partie arrière formée avec un trou de rotation (142c), le bloc intermédiaire étant couplé au niveau de sa surface supérieure à la plaque de guidage ; et
une glissière (143) couplée de manière rotative au trou de rotation (142c) et adaptée pour être déplacée de manière librement rectiligne dans une direction perpendiculaire à la direction de transfert du sachet de médicaments dans le même plan que la plaque de guidage.
